# EUROPEAN PATENT SPECIFICATION

(11) **EP 2 072 933 B1**
(45) Date of publication and mention of the grant of the patent: **01.06.2016**
(21) Application number: 08005379.6
(22) Date of filing: 20.03.2008
(51) Int. Cl.: F24J 2/38, F24J 2/54

(54) **Tracking system for a solar energy panel for azimuthally tracing the position of the sun**
Nachführeinrichtung für ein Solarpanel zur azimuthausgerichteten Nachführung der Position der Sonne
Système de suivi pour panneau solaire pour suivre azimutalement la position du soleil

(30) Priority: 18.12.2007 EP 07024533
(43) Date of publication of application: 24.06.2009
(73) Proprietor: HAWE Hydraulik SE, 81673 München (DE)
(72) Inventor: Hundschell, Hilarius, 84424 Isen (DE)
(74) Representative: Grünecker Patent- und Rechtsanwälte PartG mbB

(56) References cited:
- CH-A5- 693 244
- US-A- 4 306 540
- US-A- 4 765 144
- US-A- 6 123 067
- US-A1- 2007 023 080

## Description

### FIELD OF THE INVENTION

The present invention relates to a tracking system for a solar energy panel that is mounted at a substantially vertical rotation axis and that comprises means for azimuthally tracing the position of the sun, and relates in particular to a tracking system that comprises a hydraulic actuation means for rotating the solar energy panel.

### BACKGROUND OF THE INVENTION

Increasing costs of fossil energy sources like mineral oil and gas, that are presently the main energy sources, as well as the implications of its usage to the environment, like climate change and environmental pollution, lead to an increasing commercialization of renewable energy.

One approach of using renewable energy is to collect sunlight and to transform the solar energy into more manageable forms of energy, like electricity or heat, that may be stored and transported in liquid form, for instance water.

Since the amount of energy is directly proportional to the effective collecting area that depends on the orientation of the collector plane in relation to the radiation direction of the sunlight, an efficient usage of the sunlight requires both huge collecting areas and a tracking mechanism to follow the sun.

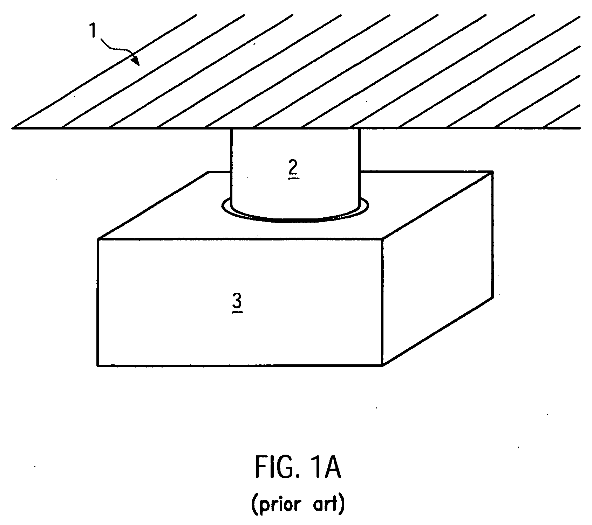

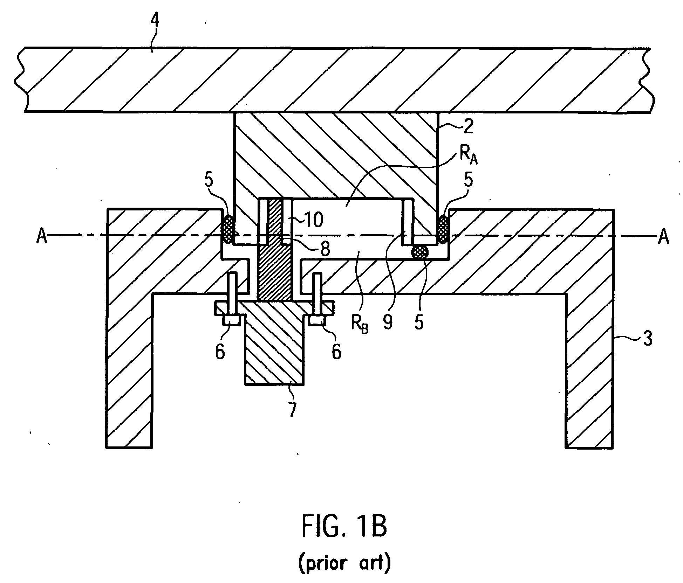

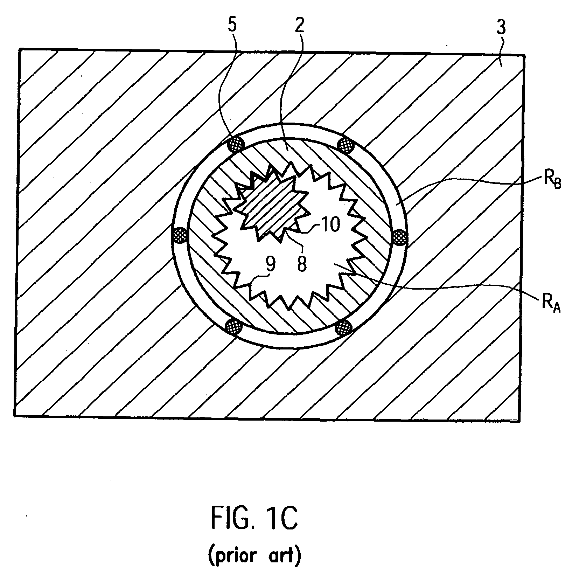

In the following, means for collecting sunlight according to the state of the art are explained with reference to Figures 1a, 1b and 1 c, representing an internal state of the art of the applicant.

Figure 1a illustrates schematically a photovoltaic unit including a solar energy panel 1, a rotating axis 2 for azimuthally rotating solar energy panel 1 and a base 3, wherein a drive means for rotating the rotation axis 2 may be incorporated. The solar energy panel 1 may include a photovoltaic module, a water heating panel or even a parabolic reflector for concentrating the solar energy to a focus point. In case of a photovoltaic panel, sizes of 105 m² having a length of approximately 16 m and a width of approximately 6.5 m are widely used.

In the following, an example for a drive means incorporated in the base 3, which represents an internal state of the art of the applicant, is explained with reference to Figures 1b and 1 c.

Figure 1 b is a cross-sectional view of a vertical cut of the solar energy system illustrated in Figure 1a. Reference numeral 4 denotes a beam to which a solar energy panel 1, e.g. a photovoltaic module, is mounted. The beam 4 is fixedly mounted to the rotating axis 2. In this case, the rotating axis 2 is a cylindrical element with a recessed portion R_{A} on the bottom side of the vertically arranged rotating axis 2. The recessed portion R_{A} has the shape of a circular cylinder, and the inner circumferential sidewalls of the cylindrically shaped recess R_{A} is provided with an inner-toothed rim 9. Teeth 10 of a gear 8 are provided to engage with the teeth of the inner-toothed rim 9. The gear 8 is connected with a motor 7 so as to transmit a rotation movement via the gear 8 to the rotation axis 2 in order to rotate the solar energy panel 1. The rotating axis 2 is supported in a circular recessed portion R_{B} of the base 3 by bearings 5. The bearings 5 may be sliding bearings or ball bearings or other appropriate bearings which allow the rotation axis 2 to rotate with low friction. The base 3 may be formed as a hollow body which also serves as an enclosure of the motor 7 whereby the motor is fixedly mounted by screws 6 inside the hollow body on the bottom surface of the top wall of the base body 3. In the configuration according to Figure 1b. the motor 7 is mounted in a manner such that the gear 8 extends through a hole in the top wall of the base 3 upwards to the recessed portion of the rotating axis 2 to engage the teeth 10 of the gear 8 with the teeth of the inner-toothed rim 9.. Although there is no particular limitation to the used motor, hydraulic motors are widely used in this configuration example according to the state of the art.

Figure 1c gives a more detailed illustration of the rotating mechanism of the solar energy panel system of the state of the art. Figure 1c is a cross-sectional view showing a horizontal cut of the system illustrated in Figure 1a along the line AA in Figure 1 b. Reference numeral 2 illustrates a horizontal cross-section of the rotating axis. Due to the chosen cut, the recessed portion R_{A} of the rotating axis 2 with the inner-toothed rim 9 is visible in this cross-sectional view. The teeth 10 of the gear 8 engage with the teeth of the inner-toothed rim 9. Thus, the motor can transmit rotational movement to the rotating axis 2 via the gear 8. The rotating axis 2 is supported by bearings 5 in the circular recess R_{B} of the base body 3.

Although the drive mechanism may be constructed for rotating large and heavy pieces, there is a particular drawback that solar energy panels are generally exposed to environmental conditions. In particular, the construction has to be strong enough to withstand high wind forces. For instance, if we assume a wind velocity of roughly 100 km/h, a panel size of 100 m², an air resistance constant of 1 and a density of the air of 1.2 kg/m³, the force on the solar energy system amounts to approximately 46 kiloNewton (kN). This force concentrates at the connection between the moveable parts of the solar energy system and the fixed parts. In the worst case, this force of 46 kN may concentrate on a single tooth of the inner-toothed rim and the gear, which may cause damaging of the teeth of the rotating mechanism. In order to prevent damage of the rotating mechanism, very stable and bulky gear mechanisms have to be constructed. Nevertheless, concentrating high forces to a single point is a general drawback of this construction.

An alternative solution for a rotating mechanism for a solar reflector is disclosed in the Swiss patent CH693244 A5. This disclosure describes a device for holding a solar collector and causing it to follow the path of the sun. The device has one axially freely moveable and rotatable driveshaft for horizontal and/or vertical movement of the collector to follow the sun position. At least one device with mechanical components converts the axial and/or rotary movement of the driveshaft into vertical pivot movement and/or horizontal rotational movement for east-west orientation of the solar collector. This document exemplifies how to transmit the rotary movement of the driveshaft to the rotary-horizontal movement for east-west orientation by means of a drive belt which is deflected by a shaft. The described mechanism requires rather complex mechanisms to convert the rotary movement of the horizontal axis into a rotary movement of the vertical axis. Further, the connection between the drive means and the solar panel is rigid. Therefore, wind forces are transmitted to the drive means directly, thereby concentrating wind forces to a motor, which lead to enforced wear of the drive means and the rotation-transmitting mechanism.

Another alternative realization of a mechanism for azimuthally tracing a position of the sun with a solar energy panel is exemplified in the French patent application FR7625026. Generally this document discloses an altitude-azimuth orientation support for a panel for adjusting the panel in elevation and in azimuth. This disclosure includes a framework extending rearwardly from the panel to a circular trackway and means for driving the framework along the trackway for azimuth orientation. The framework to which the panel is mounted includes an arm at whose end a carriage including a motor is mounted. The carriage can be drawn along the rail by, for instance, a direct drive motor which is mounted at the carriage. The position of the carriage along the rail defines the position of the framework for maneuvering in azimuth around the vertical axis. Drawing the carriage along the rail is carried out by means of a cable extending along the rail, whereby the cable is wound around a winch that is rotated by the direct drive motor. Also this drive mechanism has the disadvantage that it concentrates the wind forces on the motor axis, which might cause malfunction.

A similar configuration of a mechanism for azimuthally tracing the position of the sun for a solar energy panel is disclosed in the German patent DE10192244 B. This disclosure shows a carrier on which a panel may be mounted, which is rotatable about a first axis and a second axis. The rotary motion of the carrier about the first rotary axis is mechanically coupled to the rotary motion about the second rotary axis. The first rotary axis extends virtually horizontally, while the second rotary axis is vertical. The carrier is mounted to a frame construction on which a semicircular pulling means guide is mounted. If the tracking means is rotated by the not specified pulling means, a pivot movement of the carrier is carried out at the same time with the azimuth movement. This disclosure is silent about the critical connection between fixed parts like the motor in this case and moving parts like the semi-circular pulling means guide or the pulling means Another example for rotating a solar energy panel by means of a hydraulic element is shown in the international patent application WO2005/043671 A. This disclosure shows an apparatus for the rotation of a large body such as the base frame of a solar energy collector having a large reflective dish, about an axis that utilizes a ring member to which one end of a hydraulic ram is mounted. The other end of the ram is connected to the body or to a rigid arm that is securely connected to the body. The expansion or contraction of the ram causes the body to rotate about the axis. With this configuration, only a rotation of less than 180° is possible, thus restricting the efficiency of the tracking mechanism.

A further alternative principle of azimuthally tracking the position of the sun for a solar energy panel is exemplified in the German patent application DE4240541 A. This disclosure shows a hydraulic cylinder which is able to change the height of a rotation axis. A leader pin which engages a coil-shaped groove in the rotation axis leads to a rotational movement when the rotation axis is moved up and down. Also this configuration concentrates wind forces onto the leading pin, which might cause damaging of the rotation mechanism.

US 4, 765,144 relates to a solar-powered rankine cycle pumping engine and discloses all of the features in the preamble of claim 1.

US 6,123,067 relates to a solar collector tracking system. In particular, this document discloses a hydraulic switching system with four/three-way directional valves for supplying hydraulic cylinders with pressure in order to apply tracking forces to the solar collector tracking system.

US 4,306,540 discloses a solar collector mounting and support apparatus wherein the solar collector can be rotated around a horizontal rotation axis by means of a hydraulic actuator.

It is therefore an object of this invention to provide a tracking system for a solar energy panel which comprises means for azimuthally tracing a position of the sun which can withstand high wind loads and which can reliably trace the azimuthal position of the sun.

### SUMMARY OF THE INVENTION

In order to overcome or at least reduce one or more of the above-mentioned drawbacks and to achieve the object outlined above, there is provided a tracking system for a solar energy panel as set forth in claim 1 that is mounted at a substantially vertical rotation axis comprising means for azimuthally tracing a position of the sun having a hydraulic rotation means for rotating the solar energy panel as set forth in claim 1. Preferred embodiments are defined in the dependent claims.

In particular, there is provided a tracking system for a solar energy panel that is characterized in that the means for azimuthally tracing a position of the sun comprises: rotating means mounted at a substantially vertical rotation axis to transmit the rotation movement of the rotating means to the solar energy panel through the substantially vertical rotation axis, pulling means attached to the rotating means to apply a torque to the rotating means, and a first hydraulic cylinder connected with a first end of the pulling means to apply a torque to the rotating means via the pulling means. This configuration allows the distribution of wind forces along the length of the pulling means. A concentration of wind forces is only possible in the direction of the hydraulic cylinder that can withstand, due to its nature, high forces. Further, the hydraulic cylinder can also compensate strong force fluctuations due to gusts of wind.

In an embodiment of this invention, the rotating means is a disk. This leads to a symmetric construction which is easy to manufacture and which can distribute mechanical forces more symmetrically.

In a further embodiment of this invention, the disk is mounted concentrically at the rotating axis. Also this measure leads to a more symmetrical distribution of the wind forces.

In another embodiment of the present invention, a counter-force means is mounted at a side edge of the rotating means. Thus a flexible pulling means can be used which is less sensitive to fluctuations of the wind load because it provides clearance in both push and pull directions of the pulling means.

In one embodiment of this invention, the counter-force means may be a spring. A spring is a cost-effective solution for providing counter-force means. Alternatively, a second hydraulic cylinder may be used as the counter-force means. The advantage of a second hydraulic cylinder is that the torque for rotating the rotating axis may be controlled more precisely and gusts of wind have less influence on the rotational movement of the solar energy panel. Also, damage can be prevented because the two hydraulic cylinders may compensate force fluctuations due to the wind forces.

In one embodiment of the present invention, a second end of the pulling means is mounted at the side edge of the rotating means. Thus a simple connection between the first hydraulic cylinder and the rotating means is achieved. By mounting a second end of the pulling means to a side edge of the rotating means, an easier assembly of the hydraulic actuation means is achieved.

In an alternative embodiment, a second end of the pulling means is connected with a second hydraulic cylinder. Thus, no mounts at the rotating means are necessary, which could be a possible source of malfunction due to damage. Further, the manufacturing costs of the rotating means are lowered because the costs for the mounts may be saved.

In one illustrative embodiment, at least one of the first and second hydraulic cylinders is a double-acting hydraulic cylinder, i.e. a pushing volume and a retracting volume of the hydraulic cylinder have both an individual pressure connection. Thus, push and pull forces can be actively adjusted and controlled. This makes the system more flexible and provides more sophisticated control over the system.

In another illustrative embodiment, the first and second hydraulic cylinders are combined by a double-acting hydraulic cylinder having a through rod. Thus, fewer parts are necessary, which simplifies the overall system complexity.

In another embodiment, deflection means are provided for deflecting the pulling means to allow a vertical arrangement of at least one of the first and second hydraulic cylinders and the spring. Thus, mounting space may be saved.

In a further embodiment of this invention, the hydraulic actuating means includes a load-holding unit. The load-holding unit keeps the rotational position constant, even in the case of forced fluctuations to the solar energy panel due to changes of the wind load, when the pressure supply lines are depressurized. The load-holding unit automatically compensates for external forces which cause an external torque to the solar energy panel.

In a development of the foregoing embodiment, the load-holding unit comprises at least one valve unit comprising a first check valve connected in parallel with a pressure controlled valve provided at least at one of the first and second hydraulic cylinder. Valve units as load-holding units are a cost-effective way for providing a load-holding control because they are commercially available as a complete unit. Moreover, a load holding unit can be effectively realized by connecting in parallel a check valve and a pressure controlled valve. Further, providing the load-holding unit directly at the hydraulic cylinder provides an efficient load control.

In a further embodiment, a second check valve having a flow direction and a non-flow direction is connected in parallel in vice versa direction with the first check valve, whereby the second check valve allows flow in flow direction only above a predetermined security pressure value. The second check valve serves as a safety means for high wind loads above a predetermined security level. In case the forces to the solar energy panel become too high due to heavy winds, the second check valve opens and lets the solar energy panel turn out of the wind such that the wind forces to the solar energy panel are reduced.

In one preferred embodiment, the pulling means is a pull rope. The pull rope is the most cost-effective way of providing a connection between a hydraulic cylinder and a rotating means which also has advantages in terms of reliability due to its flexibility.

In an alternative embodiment, the pulling means is a toothed belt. The advantage of a tooth belt is that it provides more grip between the belt and the rotating means, thereby making the azimuth position more precise.

In another embodiment of this invention, the pulling means is wound at least partially around a circumferential portion of the disk. Thus, the pulling force of the at least one hydraulic cylinder as well as wind forces are distributed around the disk and provides a stabilizing effect on the whole construction. Further, the torque can be efficiently transmitted from the hydraulic cylinders to the solar energy panel.

In one illustrative embodiment, the hydraulic actuation means includes a hydraulic power pack and a switching unit. Thus, pressure can be generated and efficiently distributed and controlled.

In a further embodiment, the hydraulic power pack includes a reservoir with hydraulic liquid, and a hydraulic pump driven by a motor supplying a pressure line and a relief line. Thus, a hydraulic power pack can be realized efficiently.

In another embodiment of this invention, the hydraulic power pack further includes a pressure relief valve connected between the pressure line and the relief line. Thus, the pressure in the system can be appropriately adjusted. Further, hydraulic components, e.g. the switching unit, can be protected if the hydraulic power pack has a malfunction and produces too much pressure.

In one illustrative embodiment, the switching unit allows three states for a clockwise rotation, a counter-clockwise rotation and a hold position of the rotating means. Thus, basic operation modes are provided for precisely tracing a position of the sun.

In an alternative embodiment, the switching unit has two states for a clockwise rotation and a counter-clockwise rotation of the rotating means. Thereby, a valve having a less complex structure can be used. Moreover, a hydraulic actuation means can be realized , which has less power consumption.

In another embodiment of this invention, the hydraulic actuation means further includes means for flow control. Thus, the rotation speed of the solar energy panel can be controlled and appropriately adjusted. Further, the flow control provides a safety function, wherein the rotating mechanism is prevented from being damaged in case of fast pressure changes in the hydraulic actuation mechanism.

In another embodiment, a first port of the switching unit is connected with the pressure line and a second port of the switching unit is connected with the relief line. Thus, realization of the connection between the hydraulic power pack and the switching unit is efficiently realized. Further, a third port of the switching unit is connected to the first port of the first hydraulic cylinder and a forth port of the switching unit is connected with the first port of the second hydraulic cylinder. Thus, a connection between the switching unit and the cylinder is realized with minimum effort in order to supply the hydraulic cylinders with the desired pressure.

In a further embodiment of this application, the first port of the first hydraulic cylinder is connected with the first retracting volume for retracting a first piston of the first hydraulic cylinder and wherein the first port of the second hydraulic cylinder is connected with the second retracting volume for retracting a second piston of the second hydraulic cylinder. Thus, the hydraulic cylinders are configured to be in a pull mode for pulling the pull rope, which allows a more reliable drive of the rotating mechanism.

In another embodiment of this invention, a second port of the first hydraulic cylinder which is connected with the first pushing volume for pushing the first piston of the first hydraulic cylinder, is left open, and wherein a second port of the second hydraulic cylinder which is connected with the second pushing volume for pushing the second piston of the second hydraulic cylinder, is also left open. Thus, the assembly of connections is simplified and the overall complexity of the system is reduced without losing functionality.

In an alternative embodiment, a second port of the first hydraulic cylinder connected with a first pushing volume for pushing the first piston of the first hydraulic cylinder is connected with the first port of the second hydraulic cylinder, and a second port of the second hydraulic cylinder connected with a second pushing volume for pushing the second piston of the second hydraulic cylinder is connected with the first port of the first hydraulic cylinder. Thus the forces of the hydraulic pressure can be transmitted more efficiently to the rotating means.

In yet another embodiment of this invention, in the hold position state of the switching unit, the second port of the switching unit is connected with the third port of the switching unit and the fourth port of the switching unit representing a relieving state. Thus, the hold state of the solar energy panel can be effectively realized.

In a preferred embodiment, the switching unit comprises a 4/3-way directional valve with relieving mid position. The relieving mid position allows, in combination with the load-holding unit, interrupting the rotational movement thereby keeping the actual position of the solar energy panel secure. Thus the required functions for controlling the rotational movement of the solar energy panel can be provided efficiently. In combination with the second check valve, a safety function for the case of heavy wind loads to the solar energy panel can be provided, wherein the pressure between the two hydraulic cylinders can be balanced and the solar energy panels can turn into a position having a lower wind load.

In an alternative embodiment, the switching unit comprises a 4/2-way directional valve having a detent. The 4/2-way directional valve having a detent allows a more energy efficient tracing operation of the solar energy panel.

In another embodiment, the hydraulic actuation means is configured to provide pressure relief state to hold a position of the solar energy panel. In combination with the load holding unit, the rotational movement can be interrupted and the position of the solar energy panel can be held constant independently from the used valve configuration.

In yet another embodiment, the hydraulic actuation means further includes means for switching off pressure. Thus, a pressure relief state can be realized effectively.

In a further embodiment, the directional valve is a proportional valve. The proportional valve allows a flow control depending on the position of, for instance, a piston which opens/closes the fluid pathways. Thus, the rotation speed of the solar energy panel can be effectively controlled and the required functions of the switching unit and the flow control can be combined.

### BRIEF DESCRIPTION OF THE DRAWINGS

Further embodiments of the present invention will become more apparent with the following detailed description when taken with reference to the accompanying drawings in which:
Figure 1 a illustrates schematically a perspective view of a solar energy system according to the state of the art;
Figure 1 b shows a cross-sectional view of a vertical cut of the system of Figure 1 a;
Figure 1 c shows a cross-sectional view of a horizontal cut of the system of Figure 1 a along the line AA shown in Figure 1 b;
Figure 2 illustrates schematically a solar energy panel system according to the present invention;
Figures 3a, 3b and 3d to 3f illustrate different embodiments of an arrangement of a hydraulic actuation means for rotating the solar energy panel;
Figure 3c illustrates a comparative example of hydraulic actuation means;
Figure 4 shows an embodiment for a hydraulic circuit for operating the hydraulic actuation means; and
Figure 5 shows comparative example for a hydraulic circuit for operating the hydraulic actuation means.

### DETAILED DESCRIPTION OF THE DISCLOSURE

It is to be noted that although the present disclosure is described with reference to the embodiments as illustrated in the following detailed description, the detailed description is not intended to limit the present disclosure to the particular embodiments disclosed therein, but rather the described embodiments merely exemplify the various aspects of the present disclosure, the scope of which is defined by the appended claims.

The present invention relates to a solar energy system that includes a solar energy panel that is mounted at a substantially vertical rotation axis and that can azimuthally trace a position of the sun. The mechanism for azimuthally tracing the position of the sun is realized by a hydraulic cylinder that transmits a torque to a solar energy panel by pulling means. Thus, a robust solar energy system can be achieved, which can be rotated to azimuthally trace the position of the sun, and which can withstand high wind loads, in particular if large solar energy panels are used having sizes of more than 100 m².

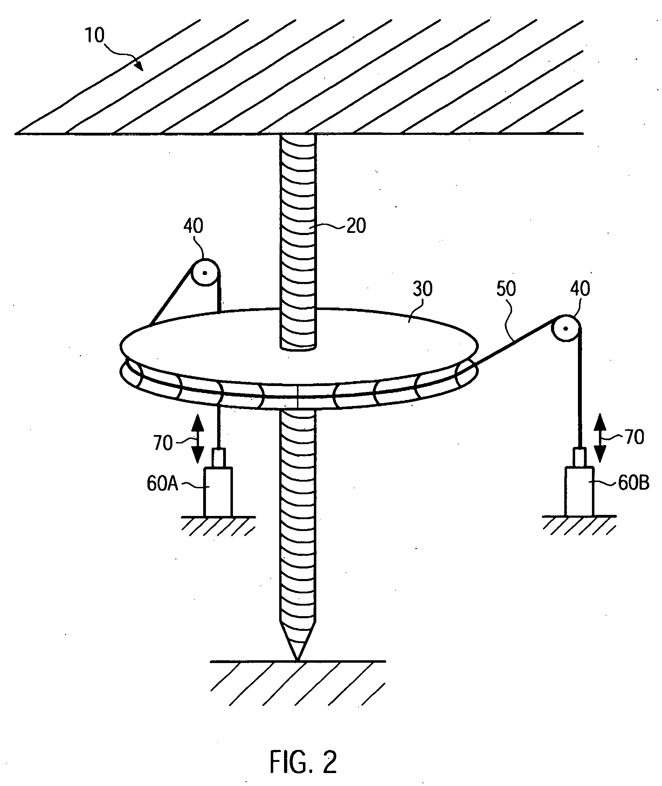

An illustrative embodiment of this invention is shown in Figure 2. Figure 2 illustrates schematically some aspects of this invention. In Figure 2, reference numeral 10 denotes a solar energy panel. The solar energy panel may be a photovoltaic element, a solar heater element, or a parabolic mirror. In any case, the solar energy panels require large dimensions to effectively collect solar energy power. The effective size of a solar energy panel may be 100 m² and even more. The solar energy panel 10 is mounted to a rotation axis 20 in order to allow a rotation of the solar energy panel for tracing the position of the sun. At the rotation axis 20, a disk 30 is concentrically mounted. A pull rope 50 is guided along the circumferential edge of the disk 30. Each end of the pull rope 50 is connected with a piston of a hydraulic cylinder 60a and 60b. The pull rope may be deflected by deflection roller 40 such that the hydraulic cylinder 60a and 60b can be mounted vertically in order to save mounting space.

Activating the pistons of the hydraulic cylinders 60a and 60b for movement in a direction of arrow 70 leads to a rotation movement of the solar energy panel 10.

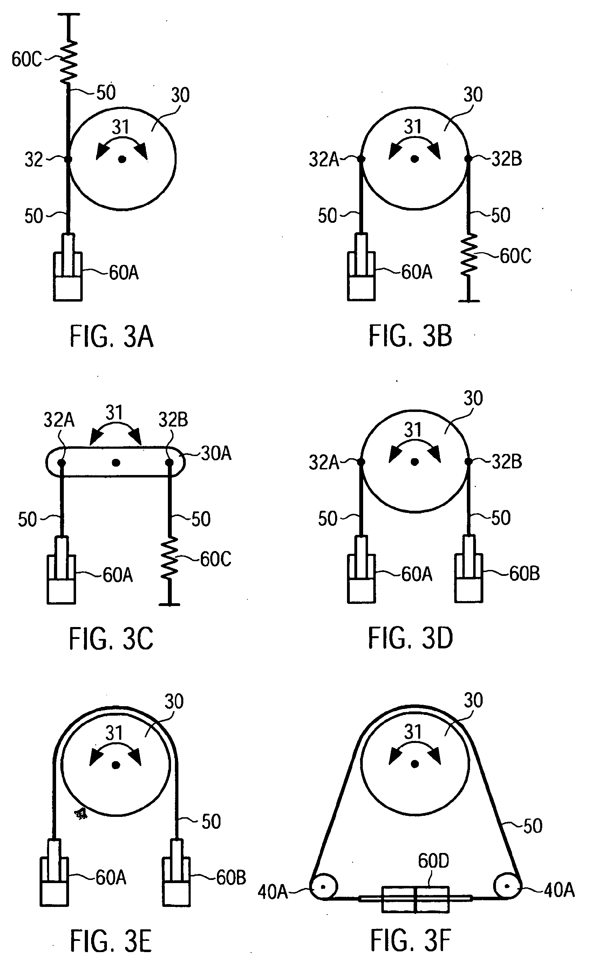

Although the rotating mechanism in Figure 2 is shown with a disk-shaped rotating means, two hydraulic cylinders and a pull rope that is wound around the circumferential edge of the disk, whereby one end of the pull rope is connected with a first piston of a first hydraulic cylinder and a second end of the pull rope is connected with a second piston of a second hydraulic cylinder, several modifications are possible as is exemplified in Figures 3a to 3f.

For instance with reference to Figure 3a, only one hydraulic cylinder 60a may be used for actively rotating the rotating means 30. A spring 60c may be used as a counterforce means to allow the usage of a flexible pull rope 50. In this case, the hydraulic cylinder 60a may be used in a pull mode only, which saves circuitry for the push mode of hydraulic cylinder 60a. Figure 3a exemplifies that the hydraulic cylinder 60a and the spring 60c are connected at one point 32 at the disk 30 via the pull rope 50. When the hydraulic cylinder 60a is activated, for instance such that the connecting point 32 is pulled against the force of the spring 60c, the disk 30 rotates in the direction of arrow 31.

Figure 3b illustrates an alternative illustrative example wherein the hydraulic cylinder 60a and the spring 60c are connected at different connecting points 32a and 32b to the disk 30. This configuration allows a larger angular rotation range than the configuration shown in Fig. 3a.

Figure 3c exemplifies a comparative example wherein the rotating means has the shape of a rod 30a. The rotating means 30 is, however, not limited to these particular shapes. Also an elliptical, triangular, rectangular or square shape is possible to provide the functionality of the rotating means. Even in the case that the rotation axis has a large diameter, the rotation axis may be used as the rotating means to which the torque can be transmitted via the pull rope 50. It is, however, preferred that the diameter of the rotating means 30 is as large as the construction allows, due to the advantages of the law of the lever. That is, the higher the diameter of the rotating means 30, the smaller the forces needed from the hydraulic cylinder 60a, 60b to rotate the solar energy panel 10. The diameter of the rotating means 30 depends on the size of the solar energy panel 10 and the used hydraulic cylinder 60a, 60b. At the least, the diameter for the rotating means 30 should be not less than 50 cm for panel sizes of 100 m<2>. Also, a large diameter of the rotating means 30 improve the grip between the rotating means 30 and the pull rope 50.

Figure 3d illustrates a situation where the spring 60c of Figure 3b is replaced by a second hydraulic cylinder 60b. Two hydraulic cylinders have the advantage that the pull forces can be adjusted more individually and flexibly in case of fluctuating wind loads, in order to achieve more stable positioning of the solar energy panel 10.

Figure 3e exemplifies a situation similar to Figure 3d wherein only a single pull rope 50 is used, which is wound around the circumferential edge of the disk 30 and each end of the pull rope 50 is connected with one corresponding hydraulic cylinder 60a and 60b. Therefore, the mounts 32a and 32b are not necessary.

Figure 3f exemplifies a situation similar to that shown in Figure 3e wherein the two hydraulic cylinders 60a and 60b have been replaced with one hydraulic cylinder 60d with a through rod and each end of the pull rope 50 is connected with different ends of the through rod of hydraulic cylinder 60d. Thus, the function of pulling the pull rope 50 in both directions can be combined with one hydraulic cylinder. Deflecting rollers 40a are necessary to deflect the pull rope 50 so as to be connected with the through rod of hydraulic cylinder 60d. Hydraulic cylinder 60d can reduce the number of parts, thus reducing system complexity.

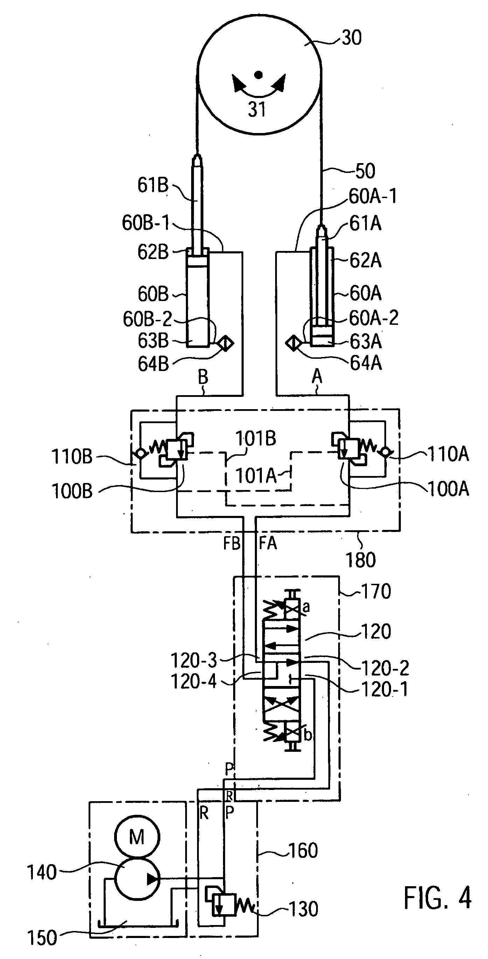

Next, an example of a hydraulic circuit is explained with reference to Figure 4. The exemplified circuit includes a hydraulic power pack 160, a switching and flow control unit 170, a load holding unit 180 and a drive mechanism comprising the rotating means 30 and two hydraulic cylinders 60a and 60b.

The hydraulic power pack 160 includes a reservoir 150 filled with hydraulic liquid and a hydraulic pump 140 driven by a motor M. The hydraulic pump 140 pressurizes a pressure line P. A relief line R recirculates the hydraulic liquid to the reservoir 150. Between the pressure line P and the relief line R may be provided a pressure relief valve 130 in order to protect the system in case of pressures which exceed a predetermined value.

The switching and flow control unit 170 comprises a 4/3-way proportional directional valve with relieving mid position representing a directional control valve 120. The proportional function is indicated by arrows crossing the solenoid symbols in the 4/3-way valve symbol 120. The integrated proportional function may reduce the number of components. The proportional function can be, however, provided separately from the 4/3-way directional valve 120, or even could be omitted, if there are reduced requirements to position accuracy. The directional control valve 120 has four connections 120-1; 120-2, 120-3, 120-4, and three switching positions **("a", "b",** and **"mid").** In a first position **"a"** allowing a clockwise rotation of the rotating means 30, port 120-1 is connected with port 120-4 and port 120-2 is connected with port 120-3. In a second position **"b"** allowing a counter-clockwise rotation of the rotating means 30, port 120-1 is connected with port 120-3 and port 120-2 is connected with port 120-4. In a third position which is called generally the **"mid"** position, and which allows holding the rotating means 30 at a fixed position, ports 120-2, 120-3 and 120-4 are interconnected, whereas port 120-1 is locked. Since port 120-2 is connected with the relief line R, this position is generally called a relieving mid-position. The directional control valve 120 is actuated by electric actuation of a solenoid that moves, e.g. a valve piston, into one of three positions according to the respective switching positions. The flow rate may be controllable via the valve piston position, which finally allows control over the rotation speed of disk 30 thereby integrating a "proportional" function to the valve. In Figure 4, port 120-2 is connected with the relief line R and port 120-1 is connected with the pressure line P. Port 120-3 is connected with a supply line FA for the first hydraulic cylinder 60a and port 120-4 of the valve 120 is connected with a supply line FB for the second hydraulic cylinder 60b. Between the directional control valve 120 and the hydraulic cylinders 60a and 60b there is provided a load holding unit 180, which allows to keep the position of the pistons 61 a and 61 b constant, when the supply lines FA and FB are not pressurized (relieving mid-position), independently from fluctuating torque to the rotating means 30 due to a fluctuating wind load on the solar energy panel.

The hydraulic cylinders 60a and 60b are double acting hydraulic cylinders, each of which includes a piston 61 a and 61 b, a pulling chamber 62a and 62b, a pushing chamber 63a and 63b, a first connection port 60a-1 and 60b-1 that is connected with the pulling chamber 62a and 62b, and a second connection port 60a-2 and 60b-2 that is connected with the pushing chamber 63a or 63b. In Figure 4, the pressure supply line FA is connected with port 60a-1 to pressurize the pull chamber 62a. Connection port 60b-1 is connected with the pressure supply line FB in order to pressurize the pulling chamber 62b. Ports 60a-2 and 60b-2 may be left open or connected with a filter unit 64a. First and second ends of a pull rope 50 are connected with corresponding pistons 61 a and 61 b of the hydraulic cylinders 60a and 60b.

The load holding unit 180 comprises two load holding valve units 100a, 101 a and 100b, 101b associated to each pressure supply line FA and FB. Each load holding valve unit 100a, 101a (100b, 101b) is connected at one end with a directional control valve 120 via connection 120-3 (120-4) and on the other side with the pulling chamber 62a (62b) via the port 60a-1 (60b-1). Each load holding valve unit 100a, 101a (100b, 101b) comprises a check valve 110a (110b) and a pressure controlled valve 100a (100b), connected in parallel to the check valve 110a (110b). The check valve 110a (110b) allows fluid flow in the direction from the directional control valve 120 to the hydraulic cylinder 60a (60b) and blocks flow in the opposite direction. Each pressure controlled valve 100a (100b) has a pilot port 101a (101b) which is cross-connected with the pressure supply line FB (FA). The pressure controlled valve 100a (100b) would allow a fluid flow in a direction from the hydraulic cylinder 60a (60b) to the directional control valve 120 if the pressure at the pilot port 101 a (101 b) exceeds a predetermined value, for instance 330 bar, and blocks the flow in the opposite direction.

In the following, the operation of the hydraulic circuit according to Figure 4 is explained. It is assumed that the hydraulic pump 140 supplies the pressure line B with pressure of, for instance, 350 bar. In a first position of the directional control valve 120 (position **"a")** the pull chamber 62b of the second hydraulic cylinder 60b is pressurized through check valve 110b. In position **"a"** of the directional control valve 120, the pull chamber 62a of the first hydraulic cylinder 60a is connected with the relief line R through pressure controlled valve 100A. When the piston 61 b of the second hydraulic cylinder 60b is retracted into the hydraulic cylinder due to the pressurized pulling chamber 62b, the first piston 61 a of the first hydraulic cylinder 60a is pulled out of the cylinder due to the pulling force of the second hydraulic cylinder 60b. The hydraulic fluid in the pulling chamber 62a is discharged through port 60a-1 into the reservoir 150 via the relief line R. Thus a rotation movement of the rotating means 30 in a counterclockwise direction according to Figure 4 is generated.

If the rotating means 30 reaches a particular position, the directional control valve 120 switches to the **"mid"** position for load holding. The load holding valve unit keeps the pressure in the pulling chambers 62a and 62b constant. Since in the **"mid"** position of the directional control valve 120 the supply lines FB and FA are pressureless, the pressure on the pilot lines 101 a and 101 b is below the threshold value of 330 bar and therefore no flow is possible through the load holding valve unit 100a, 110a, 100b, 110b.

In case that a rotation of the rotating means 30 in a clockwise direction is desired, the directional control valve 120 has to be switched into position **"b".** In this case, the pressure controlled valve 100b opens because the pressure on the pilot line 101b becomes e.g. 350 bar, which is more than the required threshold value of e.g. 330 bar. As a consequence, the hydraulic fluid in the pulling chamber 62b can be discharged through the pressure controlled valve 100b valve into the reservoir 150. On the other hand, the pulling chamber 62a of the first hydraulic cylinder 60a can be pressurized through check valve 110a such that the piston 61 a can be retracted into the hydraulic cylinder. Therefore, the piston 61 b can be pulled out of the cylinder to allow a clockwise rotation of the rotating means 30.

In a tracing operation, the 4/3-way directional valve 120 may be energized to switch into position **"b"** for clockwise rotation in predetermined intervals, e.g. every 30 minutes for 30 seconds such that the solar energy panel moves to a new position aligned with the position of the sun. The valve 120 is energized by applying a voltage of e.g. 24 V to the solenoid that drives the valve. After energizing the valve 120 for e.g. 30 seconds, the voltage is disconnected from solenoid and the valve 120 returns to the **"mid"** position for holding the orientation of the solar energy panel. After e.g. 12 hours at the end of the day, the 4/3-way directional valve 120 is energized to switch into position **"a"** for counter-clockwise rotation for e.g. 12 minutes such that the solar energy panel returns to its initial position. It has to be noted that the above valve-switching scheme serves only as an illustrative example. The person skilled in the art knows that an individual switching scheme has to be chosen depending on particular circumstances like operation during a particular season and operation at a particular location (e.g. geological latitude).

The hydraulic scheme according to Figure 4 exemplifies a configuration that allows a precise control of the movement of a solar energy panel for tracing the position of the sun.

Further modifications and variations of the present invention will be apparent to those skilled in the art in view of this description.

For instance, parallel to each load holding valve unit 100a, 101 a (100b, 101 b), there may be connected a second check valve (not shown) having a flow direction vice versa to the flow direction of the first check valve 110A (110B), whereby the second check valve allows flow in flow direction only above a predetermined security pressure value. In case of heavy wind loads, the second check valve allows the solar energy panel to turn into a position with less wind load if the pressure in the pulling chambers of the hydraulic cylinders exceeds a critical value.

The double acting hydraulic cylinder may be replaced with single acting hydraulic cylinders including or not a spring for retracting the piston.

Furthermore, the person skilled in the art is aware that the function of the proportional 4/3-way valve may be provided by one, two or more separate entities, wherein e.g. the function of the flow control is separated from the flow direction switching function. Also the 4/3 valve function may be realized by combining several simpler valves that may be placed separately at different places of the hydraulic actuating mechanism. Also pressure control means and flow control means may be realized separately or integrally combined.

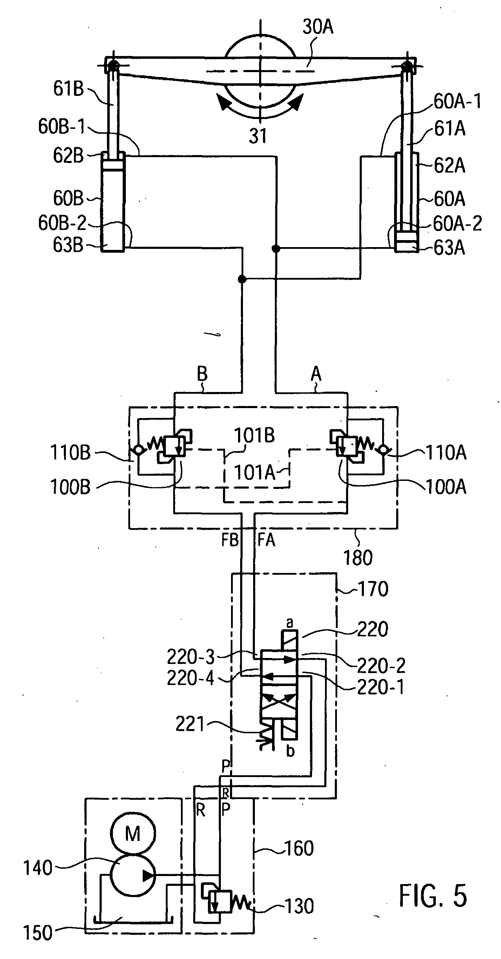

Another modification of the embodiment according to Figure 4 is exemplified for instance in Figure 5 representing a comparative example not covered by the claims. Figure 5 exemplifies a modified switching and flow control unit 170 comprising a 4/2 way directional valve 220, which has been optimized for an energy efficient operation. In the embodiment according to Figure 5, the hydraulic power pack 160, the hydraulic cylinders 60a and 60b and the load holding unit 180 are the same as in Figure 4 and the description thereof will be omitted. The switching and flow control unit 170 according to Figure 5 comprises a 4/2-way directional valve 220. The directional control valve 220 has four connections 220-1, 220-2, 220-3, 220-4, and two switching positions **("a"** and **"b").** In a first position **"a"** allowing a clockwise rotation of the rotating means 30A, port 220-1 is connected with port 220-4 and port 220-2 is connected with port 220-3. In a second position **"b"** allowing a counter-clockwise rotation of the rotating means 30, port 220-1 is connected with port 220-3 and port 220-2 is connected with port 220-4. The directional control valve 220 is actuated by electric actuation of a solenoid that moves, e.g. a valve piston 221, into one of two positions according to the respective switching positions. The piston 221 may be provided with automatic spring return (not shown) or with detent. The automatic spring return holds the valve 220 in a fixed position (e.g. position **"a")** until the solenoid is energized to move the piston 221 into another position (e.g. position **"b").** When solenoid is disconnected from energy, the valve returns to its fixed position **"a".** In case of a valve 220 with detent, the piston 221 is provided with for instance two recesses that allows the valve to engage at two positions (position **"a"** or **"b").** In this case , the position is changed by shortly energizing the solenoid without requiring permanently energizing the solenoid for holding a particular position.

In Figure 5, port 220-2 is connected with the relief line R and port 220-1 is connected with the pressure line P. Port 220-3 is connected with a supply line FA for the first hydraulic cylinder 60a and port 220-4 of the valve 220 is connected with a supply line FB for the second hydraulic cylinder 60b. Between the directional control valve 220 and the hydraulic cylinders 60a and 60b there is provided a load holding unit 180, which allows to keep the position of the pistons 61 a and 61 b constant, when the supply lines FA and FB are below a predetermined threshold pressure, independently from fluctuating torque to the rotating means 30A due to a fluctuating wind load on the solar energy panel.

In Figure 5, the rotating means 30A according to the example illustrated in Figure 3C. is used. As the person killed in the art will recognize, any of the embodiments of Figures 3A - 3F might be applicable in the embodiment of Figure 5 as well as of Figure 4.

In Figure 5, the pressure supply line FA is connected with port 60a-1 and 60b-2 via the load holding unit 180 to pressurize a pulling chamber 62a and a pushing chamber 63b. Connection port 60b-1 and 60a-2 is connected with the pressure supply line FB via the load holding unit 180 in order to pressurize the pulling chamber 62b and the pushing chamber 63a. First and second ends of the rotating means 30A are connected with corresponding pistons 61a and 61b of the hydraulic cylinders 60a and 60b.

In contrast to Figure 4, the pushing chambers 63a and 63B as well as the respective ports 60a-2 and 60b-2 are connected in Figure 5 with pressure lines FA and FB, respectively. This provides a more efficient transmission of pressure forces to the rotating means. The person skilled in the art will, however, recognize that the connection scheme as illustrated in Figure 4 is also usable depending on the user's requirements.

In the following, the operation of the hydraulic circuit according to Figure 5 is explained. Similar to the embodiment of Figure 4, it is assumed that the hydraulic pump 140 supplies the pressure line B with pressure of, for instance, 350 bar. In a first position of the directional control valve 220 (position **"a")** the pulling chamber 62a of the first hydraulic cylinder 60a and the pushing chamber 63b of the second hydraulic cylinder 60b is pressurized through check valve 110b. At the same time in position **"a"** of the directional control valve 220, the pulling chamber 62b of the second hydraulic cylinder 60b and the pushing chamber 63a of the first hydraulic cylinder 60a is connected with the relief line R through pressure controlled valve 100A. Thus, the piston 61a of the first hydraulic cylinder 60a is retracted into the hydraulic cylinder, and the piston 61 b of the second hydraulic cylinder 60b is pushed out of the cylinder. The hydraulic fluid in the pulling chamber 62b and the pushing chamber 63a is discharged through ports 60b-1 and 60a-2 into the reservoir 150 via the relief line R. Thus a rotation movement of the rotating means 30A in a clockwise direction according to Figure 5 is generated.

If the rotating means 30A reaches a particular position, the pressure is switched off from the supply line FB such that the pressure on the supply line FB and the pilot line 101 a can decrease below the threshold pressure (e.g. 330 bar in this case) of the pressure controlled valve 100A of the load holding valve unit 100a, 110a. Since valve 220 is still in position **"a",** supply-line FA and pilot line 101 b is still pressureless such that the load holding valve unit 100a, 110a, 100b, 110b can hold the position of the solar energy panel.

Switching off the pressure from the supply lines may be carried out by any appropriate means. For instance, the pump 140 may be switched off. This approach is particularly useful for an energy efficient operation. Alternatively or in addition, a shut-off valve may be provided in the pressure supply line P. This approach improves accuracy of the position of the solar energy panel.

In case that a rotation of the rotating means 30A in a counter-clockwise direction is desired, the directional control valve 220 has to be switched into position **"b".** In this case, the vice versa effects as before are achieved.

In a tracing operation, it has to be distinguished, whether a 4/2-way directional valve 220 with or without a detent is used.

In case of a 4/2-way directional valve 220 without detent, the valve 220 is operated in its home position during tracing operation. That is, the return spring of the valve holds the valve in position **"a"** (home position). For performing the tracing operation, a clockwise rotation is carried out in predetermined intervals, e.g. every 30 minutes for 30 seconds during day light such that the solar energy panel moves to a new position aligned with the position of the sun. For this purpose, the pump 140 is switched on for e.g. 30 seconds. After e.g. 12 hours at the end of the day, the pump 140 and the 4/2-way directional valve 220 is energized to switch into position **"b"** for counter-clockwise rotation for e.g. 12 minutes such that the solar energy panel returns to its initial position. Again, it has to be noted that the above valve-switching scheme serves only as an illustrative example. The person skilled in the art knows that an individual switching scheme has to be chosen depending on particular circumstances like operation during a particular season and operation at a particular location (e.g. geological latitude).

In case of a 4/2-way directional valve 220 with detent, the valve 220 is set to an initial position **"a"** at the beginning of a tracing operation by applying a voltage of e.g. 24 V for 1 second to the solenoid. The detent secures the valve 220 in position **"a".** As before, a clockwise rotation is carried out in predetermined intervals, e.g. every 30 minutes for 30 seconds during day light such that the solar energy panel moves to a new position aligned with the position of the sun. For this purpose, the pump 140 is switched on for e.g. 30 seconds. After e.g. 12 hours at the end of the day, the 4/2-way directional valve 220 is energized by applying a voltage of e.g. 24 V for 1 second to the solenoid to switch into position **"b"** for counter-clockwise rotation. The detent secures the valve 220 in position **"b".** Afterwards, the pump 140 is energized for e.g. 12 minutes such that the solar energy panel returns to its initial position.

In the following, the energy consumption of the 4/3-way valve (without proportional function), the 4/2-way valve with spring return and the 4/2-way valve with detent during a 1 day tracing operation will be compared. The tracing operation is carried out according to the above outlined scheme. It is assumed that the solenoid requires a current of 5 Ampere (A) for a switching operation.

In case of the 4/3-way valve, the tracing operation requires 24 switching periods during 12 hours daylight for clockwise rotation. During each switching period, a voltage of 24 V is applied and a current of 5 A flows through the solenoid for 30 seconds to reach a new position for the solar energy panel. That is the switching energy for the clockwise rotation at one day is 24x24Vx5Ax30s = 86 400 J. The counter clockwise rotation for returning to the initial position requires one switching period during which the solenoid is energized for approximately 12 minutes (720 seconds). That is the switching energy for the counter clockwise rotation is 24Vx5Ax720s = 86 400 J. The total energy consumption amounts therefore to 172 000 J. For the sake of simplification, the proportional function has not been considered, which would increase the power consumption.

In case of the 4/2-way valve with spring return, the tracing operation requires no switching period during 12 hours daylight for clockwise rotation, because the spring already holds the required switching position of the valve. The counter clockwise rotation for returning to the initial position requires one switching period during which the solenoid is energized for approximately 12 minutes (720 seconds). That is the switching energy for the counter clockwise rotation is 24Vx5Ax720s = 86 400 J. The total energy consumption amounts therefore to 86 400 J.

In case of the 4/2-way valve with detent, the tracing operation requires 1 switching period during 12 hours daylight for clockwise rotation at the beginning of the tracing operation. During the switching period, a voltage of 24 V is applied and a current of 5 A flows through the solenoid for 1 second to ensure safe switching. Afterwards, the detent holds the required switching position of the valve. That is the switching energy for the clockwise rotation at one day is 24Vx5Ax1 s = = 120 J. The counter clockwise rotation for returning to the initial position requires one switching period during which the solenoid is energized for approximately 1 second. Afterwards, the detent holds the required switching position of the valve. That is the switching energy for the counter clockwise rotation is 24Vx5Ax1 s = 120 J. The total energy consumption amounts therefore to 240 J.

As it can be seen from the three examples, the 4/2-way valve with detent provides the most energy efficient operation.

It has to be noted that the parameter values (voltage, current, time) used above are only illustrative examples that depend strongly on the valve types and environmental conditions like season and geological latitude. The energy calculations should serve, therefore, only for illustrating the principle.

In view of these modifications and variations of the present invention, the description is to be construed as illustrative only and is for the purpose of teaching those skilled in the art the general principal of carrying out the present invention. It has to be understood that the invention should not be limited to the particular embodiments described therein but is defined by the appended claims.

## Claims

1. A tracking system adapted for usage with a solar energy panel (10) that is mounted at a substantially vertical rotation axis (20) comprising means for azimuthally tracing a position of the sun having a hydraulic actuation means for rotating the solar energy panel,
wherein the means for azimuthally tracing a position of the sun comprises:
rotating means (30), wherein the rotating means (30) is a disc;
pulling means (50) attached at the rotating means (30) to apply a torque to the rotating means (30) for rotating the disc in a first direction,
a first hydraulic cylinder (60A) connected with a first end of the pulling means (50) to apply a torque to the rotating means (30) via the pulling means (50), and
counter-force means configured to apply a torque to the rotating means (30) for rotating the disc in a second direction opposite to the first direction,
wherein the rotating means (30) is mounted at the substantially vertical - rotation axis (20) to transmit a rotation movement of the rotating means (30) to the solar energy panel (10) through the substantially vertical rotation axis (20),
wherein the pulling means (50) is wound at least partially around a circumferential portion of the disk (30), and
wherein the hydraulic actuation means comprises a load holding unit (180) and a switching unit (170), the switching unit (170) comprising a 4/3-way directional valve with a relieving mid-position.

2. The tracking system according to claim 1, wherein the disc is mounted concentrically at the rotating axis (20).

3. The tracking system according to any one of the claims 1 - 2, wherein the counter-force means is mounted at a side edge of the rotating means.

4. The tracking system according to claim 3, wherein the counter-force means is a spring.

5. The tracking system according to claim 3, wherein the counter-force means is a second hydraulic cylinder.

6. The tracking system according to any one of the claims 1 - 5, wherein a second end of the pulling means is mounted at a side edge of the rotating means.

7. The tracking system according to any one of the claims 1 - 5, wherein a second end of the pulling means is connected with a second hydraulic cylinder.

8. The tracking system according to any one of the claims 1 - 7, wherein at least one of the first and second hydraulic cylinder (60A, 60B) is a double acting hydraulic cylinder.

9. The tracking system according to any one of the claims 6 - 8, wherein the first and second hydraulic cylinder is combined by a double acting hydraulic cylinder (60D) having a through-rod.

10. The tracking system according to any one of the claims 1 - 9, further comprising deflection means (40) for deflecting the pulling means (50) to allow a vertical arrangement of at least one of the first and second hydraulic cylinder (60A, 60B, 60D) and the spring (60C).

11. The tracking system according to any one of the claims 1 - 10, wherein the load holding unit (180) comprises at least one valve unit comprising a first check valve (101A, 101B) connected in parallel with a pressure controlled valve (100A, 100B) provided at least at one of the first and second hydraulic cylinder (60A, 60B, 60D).

12. The tracking system according to claim 11, wherein the at least one valve unit further comprises a second check valve having a flow direction and a non-flow direction, wherein the second check valve is connected in parallel in vice versa direction with the first check valve (101A, 101B), the second check valve allows flow in said flow direction only above a predetermined security pressure value.

13. The tracking system according to any one of the claims 1 - 12, wherein the pulling means (50) is a pull rope.

14. The tracking system according to any one of the claims 1 - 12, wherein the pulling means (50) is a toothed belt.

15. The tracking system according to any one of the claims 1 - 14, wherein the hydraulic actuation means includes a hydraulic power pack (160) and the switching unit (170).

16. The tracking system according to claim 15, wherein the hydraulic power pack (160) includes a reservoir with hydraulic liquid (150), and a hydraulic pump (140) driven by a motor (M) supplying a pressure line (P) and a relieve line (R).

17. The tracking system according to claim 16, wherein the hydraulic power pack (160) further includes a pressure relief valve (130) connected between the pressure line (P) and the relieve line (R).

18. The tracking system according to any one of the claims 1 - 17, wherein the switching unit (170) allows three states for a clockwise rotation, a counter-clockwise rotation and a hold position of the rotating means (30).

19. The tracking system according to any one of the claims 1 - 18, wherein the hydraulic actuation means further includes means for flow control.

20. The tracking system according to any one of the claims 1 - 19, wherein a first port (120-1, 220-1) of the switching unit (170) is connected with the pressure line (P), a second port (120-2, 220-2) of the switching unit (170) is connected with the relieve line (R), a third port (120-3, 220-3) of the switching unit (170) is connected with a first port (60A-1) of the first hydraulic cylinder (60A), and a fourth port (120-4, 220-4) of the switching unit (170) is connected with a first port (60B-1) of the second hydraulic cylinder (60B).

21. The tracking system according to claim 20, wherein the first port (60A-1) of the first hydraulic cylinder (60A) is connected with a first retracting volume (62A) for retracting a first piston (61A) of the first hydraulic cylinder (60A), and wherein the first port (60B-2) of the second hydraulic cylinder (60B) is connected with a second retracting volume (62B) for retracting a second piston (61 B) of the second hydraulic cylinder (60B).

22. The tracking system according to claim 21, wherein a second port (60A-2) of the first hydraulic cylinder (60A) connected with a first pushing volume (63A) for pushing the first piston (61A) of the first hydraulic cylinder (60A) is left open, and wherein a second port (60B-2) of the second hydraulic cylinder (60B) connected with a second pushing volume (62B) for pushing the second piston (61 B) of the second hydraulic cylinder (60B) is left open.

23. The tracking system according to claim 21, wherein a second port (60A-2) of the first hydraulic cylinder (60A) connected with a first pushing volume (63A) for pushing the first piston (61A) of the first hydraulic cylinder (60A) is connected with the first port (60B-2) of the second hydraulic cylinder (60B), and wherein a second port (60B-2) of the second hydraulic cylinder (60B) connected with a second pushing volume (62B) for pushing the second piston (61 B) of the second hydraulic cylinder (60B) is connected with the first port (60B-2) of the first hydraulic cylinder (60B).

24. The tracking system according to claim 18 and any one of the claims 19 - 23, wherein in the hold position state of the switching unit (170), the second port (120-2) of the switching unit (170) is connected with the third port (120-3) of the switching unit (170) and the fourth port (120-4) of the switching unit (170) representing a relieving state.

25. The tracking system according to any one of the claims 1 to 24, wherein the hydraulic actuation means is configured to provide pressure relief state to hold a position of the solar energy panel (10).

26. The tracking system according to the claim 25, wherein the hydraulic actuation means further includes means for switching off pressure.

27. The tracking system according to any one of the claims 1 - 26, wherein the directional valve (120) is a proportional valve.

28. A solar energy system comprising a solar energy panel (10) and a tracking system according to any one of the claims 1 to 27.

## Patentansprüche

1. Nachführsystem, das für die Verwendung mit einem Solarpanel (10) ausgebildet ist, an einer im Wesentlichen vertikalen Drehachse (20) montiert ist und eine Einrichtung zum azimutalen Verfolgen der Position der Sonne einschließlich einer hydraulischen Betätigungseinrichtung zum Drehen des Solarpanels umfasst,
wobei die Einrichtung zum azimutalen Verfolgen der Position der Sonne umfasst:
eine Dreheinrichtung (30), wobei die Dreheinrichtung (30) eine Scheibe ist,
eine Zieheinrichtung (50), die an der Dreheinrichtung (30) angebracht ist, um ein Drehmoment auf die Dreheinrichtung (30) für das Drehen der Scheibe in einer ersten Richtung auszuüben,
einen ersten Hydraulikzylinder (60A), der mit einem ersten Ende der Zieheinrichtung (50) verbunden ist, um ein Drehmoment auf die Dreheinrichtung (30) über die Zieheinrichtung (50) auszuüben, und
eine Gegenkrafteinrichtung, die konfiguriert ist, um ein Drehmoment auf die Dreheinrichtung (30) für das Drehen der Scheibe in einer zweiten Richtung, die der ersten Richtung entgegengesetzt ist, auszuüben,
wobei die Dreheinrichtung (30) an der im Wesentlichen vertikalen Drehachse (20) montiert ist, um eine Drehbewegung der Dreheinrichtung (30) auf das Solarpanel (10) über die im Wesentlichen vertikale Drehachse (20) zu übertragen,
wobei die Zieheinrichtung (50) wenigstens teilweise um einen Umfangsteil der Scheibe (30) herum gewunden ist, und
wobei die hydraulische Betätigungseinrichtung eine Lasthalteeinheit (180) und eine Schalteinheit (170) umfasst, wobei die Schalteinheit (170) ein 4/3-Wegeventil mit einer entlastenden Mittenposition umfasst.

2. Nachführsystem nach Anspruch 1, wobei die Scheibe konzentrisch an der Drehachse (20) montiert ist.

3. Nachführsystem nach Anspruch 1 oder 2, wobei die Gegenkrafteinrichtung an einer Seitenkante der Dreheinrichtung montiert ist.

4. Nachführsystem nach Anspruch 3, wobei die Gegenkrafteinrichtung eine Feder ist.

5. Nachführsystem nach Anspruch 3, wobei die Gegenkrafteinrichtung ein zweiter Hydraulikzylinder ist.

6. Nachführsystem nach einem der Ansprüche 1-5, wobei ein zweites Ende der Zieheinrichtung an einer Seitenkante der Dreheinrichtung montiert ist.

7. Nachführsystem nach einem der Ansprüche 1-5, wobei ein zweites Ende der Zieheinrichtung mit einem zweiten Hydraulikzylinder verbunden ist.

8. Nachführsystem nach einem der Ansprüche 1-7, wobei der erste und/oder der zweite Hydraulikzylinder (60A, 60B) ein doppelt wirkender Hydraulikzylinder ist.

9. Nachführsystem nach einem der Ansprüche 6-8, wobei der erste und der zweite Hydraulikzylinder durch einen doppelt wirkenden Hydraulikzylinder (60D) mit einer Durchgangsstange kombiniert sind.

10. Nachführsystem nach einem der Ansprüche 1-9, die weiterhin eine Ablenkungseinrichtung (40) zum Ablenken der Zieheinrichtung (50) umfasst, um eine vertikale Anordnung des ersten und/oder des zweiten Hydraulikzylinders (60A, 60B, 60D) und der Feder (60C) zu gestatten.

11. Nachführsystem nach einem der Ansprüche 1-10, wobei die Lasthalteeinheit (180) wenigstens eine Ventileinheit umfasst, die ein erstes Rückschlagventil (101A, 101B) umfasst, das parallel mit einem druckgesteuerten Ventil (100A, 100B) verbunden ist, das an dem ersten und/oder dem zweiten Hydraulikzylinder (60A, 60B, 60D) vorgesehen ist.

12. Nachführsystem nach Anspruch 11, wobei die wenigstens eine Ventileinheit weiterhin ein zweites Rückschlagventil mit einer Flussrichtung und einer nicht-Flussrichtung umfasst, wobei das zweite Rückschlagventil parallel in der umgekehrten Richtung mit dem ersten Rückschlagventil (101A, 101 B) verbunden ist, wobei das zweite Rückschlagventil einen Fluss in der Flussrichtung nur über einem vorbestimmten Sicherheitsdruckventil gestattet.

13. Nachführsystem nach einem der Ansprüche 1-12, wobei die Zieheinrichtung (50) ein Zugseil ist.

14. Nachführsystem nach einem der Ansprüche 1-12, wobei die Zieheinrichtung (50) ein Zahnriemen ist.

15. Nachführsystem nach einem der Ansprüche 1-14, wobei die hydraulische Betätigungseinrichtung ein Hydraulikaggregat (160) und die Schalteinheit (170) enthält.

16. Nachführsystem nach Anspruch 15, wobei das Hydraulikaggregat (160) ein Reservoir mit einer Hydraulikflüssigkeit (150) und eine durch einen Motor (M) betriebene Hydraulikpumpe (140), die mit einer Druckleitung (P) und einer Entlastungsleitung (R) verbunden ist, enthält.

17. Nachführsystem nach Anspruch 16, wobei das Hydraulikaggregat (160) weiterhin ein Druckentlastungsventil (130), das zwischen der Druckleitung (P) und der Entlastungsleitung (R) verbunden ist, enthält.

18. Nachführsystem nach einem der Ansprüche 1-17, wobei die Schalteinheit (170) drei Zustände jeweils für eine Drehung im Uhrzeigersinn, eine Drehung gegen den Uhrzeigersinn und eine Halteposition der Dreheinrichtung (30) vorsieht.

19. Nachführsystem nach einem der Ansprüche 1-18, wobei die hydraulische Betätigungseinrichtung weiterhin eine Einrichtung für eine Flusssteuerung enthält.

20. Nachführsystem nach einem der Ansprüche 1-19, wobei ein erster Anschluss (120-1, 220-1) der Schalteinheit (170) mit der Druckleitung (P) verbunden ist, ein zweiter Anschluss (120-2, 220-2) der Schalteinheit (170) mit der Entlastungsleitung (R) verbunden ist, ein dritter Anschluss (120-3, 220-3) der Schalteinheit (170) mit einem ersten Anschluss (60A-1) des ersten Hydraulikzylinders (60A) verbunden ist und ein vierter Anschluss (120-4, 220-4) der Schalteinheit (170) mit einem ersten Anschluss (60B-1) des zweiten Hydraulikzylinders (60B) verbunden ist.

21. Nachführsystem nach Anspruch 20, wobei der erste Anschluss (60A-1) des ersten Hydraulikzylinders (60A) mit einem ersten Rückziehvolumen (62A) zum Zurückziehen eines ersten Kolbens (61A) des ersten Hydraulikzylinders (60A) verbunden ist und wobei der erste Anschluss (60B-2) des zweiten Hydraulikzylinders (60B) mit einem zweiten Rückziehvolumen (62B) zum Zurückziehen eines zweiten Kolbens (61 B) des zweiten Hydraulikzylinders (60B) verbunden ist.

22. Nachführsystem nach Anspruch 21, wobei ein zweiter Anschluss (60A-2) des ersten Hydraulikzylinders (60A), der mit einem ersten Drückvolumen (63A) zum Drücken des ersten Kolbens (61A) des ersten Hydraulikzylinders (60A) verbunden ist, offen gelassen ist und wobei ein zweiter Anschluss (60B-2) des zweiten Hydraulikzylinders (60B), der mit einem zweiten Drückvolumen (62B) zum Drücken des zweiten Kolbens (61 B) des zweiten Hydraulikzylinders (60B) verbunden ist, offen gelassen ist.

23. Nachführsystem nach Anspruch 21, wobei ein zweiter Anschluss (60A-2) des ersten Hydraulikzylinders (60A), der mit einem ersten Drückvolumen (63A) zum Drücken des ersten Kolbens (61A) des ersten Hydraulikzylinders (60A) verbunden ist, mit dem ersten Anschluss (60B-2) des zweiten Hydraulikzylinders (60B) verbunden ist und wobei ein zweiter Anschluss (60B-2) des zweiten Hydraulikzylinders (60B), der mit einem zweiten Drückvolumen (62B) zum Drücken des zweiten Kolbens (61 B) des zweiten Hydraulikzylinders (60B) verbunden ist, mit dem ersten Anschluss (60B-2) des ersten Hydraulikzylinders (60B) verbunden ist.

24. Nachführsystem nach Anspruch 18 und einem der Ansprüche 19-23, wobei in dem Haltepositionszustand der Schalteinheit (170) der zweite Anschluss (120-2) der Schalteinheit (170) mit dem dritten Anschluss (120-3) der Schalteinheit (170) verbunden ist und der vierte Anschluss (120-4) der Schalteinheit (170) einen Entlastungszustand vorsieht.

25. Nachführsystem nach einem der Ansprüche 1 bis 24, wobei die hydraulische Betätigungseinrichtung konfiguriert ist, um einen Druckentlastungszustand zum Halten einer Position des Solarpanels (10) vorzusehen.

26. Nachführsystem nach Anspruch 25, wobei die hydraulische Betätigungseinrichtung weiterhin eine Einrichtung zum Abschalten des Drucks umfasst.

27. Nachführsystem nach einem der Ansprüche 1-26, wobei das Wegeventil (120) ein Proportionalventil ist.

28. Solarsystem, das ein Solarpanel (10) und ein Nachführsystem nach einem der Ansprüche 1 bis 27 umfasst.

## Revendications

1. Système de poursuite adapté à être utilisé avec un panneau à énergie solaire (10) qui est monté sur un axe de rotation sensiblement vertical (20), comprenant un moyen pour poursuivre la position du soleil de manière azimutale, possédant un moyen d'actionnement hydraulique pour faire tourner le panneau à énergie solaire,
dans lequel le moyen de poursuite azimutale de la position du soleil comprend :
un moyen de rotation (30), dans lequel le moyen de rotation (30) est un disque ;
un moyen de traction (50) fixé au moyen de rotation (30) pour appliquer un couple au moyen de rotation (30) pour faire tourner le disque dans une première direction,
un premier vérin hydraulique (60A) relié à une première extrémité du moyen de traction (50) pour appliquer un couple au moyen de rotation (30) par l'intermédiaire du moyen de traction (50), et
un moyen de force antagoniste configuré pour appliquer un couple au moyen de rotation (30) pour faire tourner le disque dans une seconde direction opposée à la première direction,
dans lequel le moyen de rotation (30) est monté sur l'axe de rotation sensiblement vertical (20) pour transmettre un mouvement de rotation du moyen de rotation (30) au panneau à énergie solaire (10) par l'intermédiaire de l'axe de rotation sensiblement vertical (20),
dans lequel le moyen de traction (50) est enroulé au moins partiellement autour de la partie circonférentielle du disque (30), et
dans lequel le moyen d'actionnement hydraulique comprend une unité de maintien de charge (180) et une unité de commutation (170), l'unité de commutation (170) comprenant un distributeur directionnel 4/3 avec une position médiane de décharge.

2. Système de poursuite selon la revendication 1, dans lequel le disque est monté de manière concentrique sur l'axe de rotation (20).

3. Système de poursuite selon l'une quelconque des revendications 1 à 2, dans lequel le moyen de force antagoniste est monté sur le bord latéral du moyen de rotation.

4. Système de poursuite selon la revendication 3, dans lequel le moyen de force antagoniste est un ressort.

5. Système de poursuite selon la revendication 3, dans lequel le moyen de force antagoniste est un second vérin hydraulique.

6. Système de poursuite selon l'une quelconque des revendications 1 à 5, dans lequel la deuxième extrémité du moyen de traction est montée sur le bord latéral du moyen de rotation.

7. Système de poursuite selon l'une quelconque des revendications 1 à 5, dans lequel la seconde extrémité du moyen de traction est raccordée à un second vérin hydraulique.

8. Système de poursuite selon l'une quelconque des revendications 1 à 7, dans lequel au moins un du premier et du second vérin hydraulique (60A, 60B) est un vérin hydraulique à double action.

9. Système de poursuite selon l'une quelconque des revendications 6 à 8, dans lequel les premier et second vérins hydrauliques sont combinés par un vérin hydraulique à double action (60D) comportant une tige traversante.

10. Système de poursuite selon l'une quelconque des revendications 1 à 9, comprenant en outre un moyen de déviation (40) pour dévier le moyen de traction (50) pour permettre un agencement vertical d'au moins un du premier et du second vérin hydraulique (60A, 60B, 60D) et du ressort (60C).

11. Système de poursuite selon l'une quelconque des revendications 1 à 10, dans lequel l'unité de maintien de charge (180) comprend au moins une unité de soupape comprenant une première soupape antiretour (101A, 101B) raccordée en parallèle avec un robinet pressostatique (100A, 100B) prévu au moins au niveau d'un du premier et du second vérin hydraulique (60A, 60B, 60D).

12. Système de poursuite selon la revendication 11, dans lequel l'au moins une unité de soupape comprend en outre une seconde soupape antiretour ayant une direction d'écoulement et une direction de non écoulement, dans lequel la seconde soupape antiretour est raccordée en parallèle en direction inverse avec la première soupape antiretour (101A, 101B), la seconde soupape antiretour permettant un écoulement dans ladite direction d'écoulement uniquement au-dessus d'une valeur de pression de sécurité prédéterminée.

13. Système de poursuite selon l'une quelconque des revendications 1 à 12, dans lequel le moyen de traction (50) est une corde de traction.

14. Système de poursuite selon l'une quelconque des revendications 1 à 12, dans lequel le moyen de traction (50) est une courroie dentée.

15. Système de poursuite selon l'une quelconque des revendications 1 à 14, dans lequel le moyen d'actionnement hydraulique comporte un groupe hydraulique (160) et l'unité de commutation (170).

16. Système de poursuite selon la revendication 15, dans lequel le groupe hydraulique (160) comporte un réservoir avec un liquide hydraulique (150) et une pompe hydraulique (140) entraînée par un moteur (M) alimentant une ligne de pression (P) et une ligne de décharge (R).

17. Système de poursuite selon la revendication 16, dans lequel le groupe hydraulique (160) comporte en outre une soupape de décharge (130) raccordée entre la ligne de pression (P) et la ligne de décharge (R).

18. Système de poursuite selon l'une quelconque des revendications 1 à 17, dans lequel l'unité de commutation (170) autorise trois états de rotation dans le sens des aiguilles d'une montre, rotation dans le sens inverse des aiguilles d'une montre et position de maintien du moyen de rotation (30).

19. Système de poursuite selon l'une quelconque des revendications 1 à 18, dans lequel le moyen d'actionnement hydraulique comporte en outre un moyen de commande d'écoulement.

20. Système de poursuite selon l'une quelconque des revendications 1 à 19, dans lequel un premier accès (120-1, 220-1) de l'unité de commutation (170) est raccordé à la ligne de pression (P), un deuxième accès (120-2, 220-2) de l'unité de commutation (170) est raccordé à la ligne de décharge (R), un troisième accès (120-3, 220-3) de l'unité de commutation (170) est raccordé à un premier accès (60A-1) du premier vérin hydraulique (60A) et un quatrième accès (120-4, 220-4) de l'unité de commutation (170) est raccordé à un premier accès (60B-1) du second vérin hydraulique (60B).

21. Système de poursuite selon la revendication 20, dans lequel le premier accès (60A-1) du premier vérin hydraulique (60A) est raccordé à un premier volume de rétraction (62A) pour rétracter un premier piston (61A) du premier vérin hydraulique (60A), et dans lequel le premier accès (60B-2) du second vérin hydraulique (60B) est raccordé à un second volume de rétraction (62B) pour rétracter un second piston (61B) du second vérin hydraulique (60B).

22. Système de poursuite selon la revendication 21, dans lequel un second accès (60A-2) du premier vérin hydraulique (60A) raccordé à un premier volume de poussée (63A) pour pousser le premier piston (61A) du premier vérin hydraulique (60A) est laissé ouvert, et dans lequel un second accès (60B-2) du second vérin hydraulique (60B) raccordé à un second volume de poussée (62B) pour pousser le second piston (61B) du second vérin hydraulique (60B) est laissé ouvert.

23. Système de poursuite selon la revendication 21, dans lequel un second accès (60A-2) du premier vérin hydraulique (60A) relié à un premier volume de poussée (63A) pour pousser le premier piston (61A) du premier vérin hydraulique (60A) est raccordé au premier accès (60B-2) du second vérin hydraulique (60B), et dans lequel un second accès (60B-2) du second vérin hydraulique (60B) raccordé à un second volume de poussée (62B) pour pousser le second piston (61B) du second verra hydraulique (60B) est raccordé au premier accès (60B-2) du premier vérin hydraulique (60B).

24. Système de poursuite selon la revendication 18 et selon l'une quelconque des revendications 19 à 23, dans lequel, dans l'état de position de maintien de l'unité de commutation (170), le second accès (120-2) de l'unité de commutation (170) est raccordé au troisième accès (120-3) de l'unité de commutation (170) et au quatrième accès (120-4) de l'unité de commutation (170) représentant un état de décharge.

25. Système de poursuite selon l'une quelconque des revendications 1 à 24, dans lequel le moyen d'actionnement hydraulique est configuré pour fournir un état de décharge pour maintenir la position du panneau à énergie solaire (10).

26. Système de poursuite selon la revendication 25, dans lequel le moyen d'actionnement hydraulique comporte en outre un moyen pour couper la pression.

27. Système de poursuite selon l'une quelconque des revendications 1 à 26, dans lequel le distributeur directionnel (120) est une soupape proportionnelle.

28. Système à énergie solaire comprenant un panneau à énergie solaire (10) et un système de poursuite selon l'une quelconque des revendications 1 à 27.
